# EUROPEAN PATENT APPLICATION

(11) **EP 4 379 836 A1**
(43) Date of publication of application: **05.06.2024**
(21) Application number: 22923461.2
(22) Date of filing: 01.12.2022
(51) Int. Cl.: H01M 4/13, H01M 4/62, H01M 10/0525

(54) **POSITIVE ELECTRODE ACTIVE MATERIAL COMPOSITION, AQUEOUS POSITIVE ELECTRODE SLURRY, POSITIVE ELECTRODE SHEET, SECONDARY BATTERY, AND ELECTRIC DEVICE**

(30) Priority: 27.01.2022 CN 202210099465
(71) Applicant: Contemporary Amperex Technology Co., Limited, Ningde, Fujian 352100 (CN)
(72) Inventor: PEI, Haile, Ningde, Fujian 352100 (CN); CHENG, Cong, Ningde, Fujian 352100 (CN); CHEN, Junguang, Ningde, Fujian 352100 (CN); ZHANG, Shengwu, Ningde, Fujian 352100 (CN); WANG, Xinghui, Ningde, Fujian 352100 (CN); WU, Yanying, Ningde, Fujian 352100 (CN)
(74) Representative: Jacob, Reuben Ellis
(86) International application number: PCT/CN2022/135788
(87) International publication number: WO 2023/142670

(57) **Abstract**

The present application discloses a positive electrode active material composition, an aqueous positive electrode slurry, a positive electrode sheet, a secondary battery, and an electric device. The positive electrode active material composition comprises a first positive electrode active material, a second positive electrode active material, and a third positive electrode active material. The volume mean particle diameter Dv50 of the first positive electrode active material is A1 µm, wherein 0.2≤ A1≤0.8; the volume mean particle diameter Dv50 of the second positive electrode active material is A2 µm, wherein 1.0≤A2≤2.5; and the volume mean particle diameter Dv50 of the third positive electrode active material is A3 µm, wherein 3.0^A3^6.0. According to the present application, the positive electrode sheet can have relatively high compaction density and also have relatively low moisture content.

## Description

### CROSS-REFERENCE TO RELATED APPLICATIONS

The present application claims priority to Chinese Patent Application No. 202210099465.1, filed on January 27, 2022, entitled "POSITIVE ELECTRODE ACTIVE MATERIAL COMPOSITION, WATER-BASED POSITIVE ELECTRODE SLURRY, POSITIVE ELECTRODE PLATE, SECONDARY BATTERY, AND ELECTRICAL DEVICE", which is hereby incorporated by reference in its entirety.

### TECHNICAL FIELD

This application belongs to the field of battery technology, in particular to a positive electrode active material composition, aqueous positive electrode slurry, positive electrode plate, secondary battery, and electrical device.

### BACKGROUNDS

In recent years, secondary batteries have been widely used in energy storage power systems such as hydropower, firepower, wind power, and solar power plants, as well as in various fields such as electric tools, electric bicycles, electric motorcycles, electric vehicles, military equipment, aerospace, etc. With the application and promotion of secondary batteries, their cost and environmental pollution issues are receiving increasing attention. The positive electrode plate is one of the key factors determining the performance of secondary batteries. The solvent used for existing positive electrode slurry is usually an oil-based solvent, such as N-methylpyrrolidone (NMP). NMP, however, has the drawbacks of high dosage, volatility, toxicity, and high cost, which not only causes serious environmental pollution, but also endangers human health. Therefore, it is necessary to develop a low-cost, environmentally friendly, and high-performance water-based positive electrode slurry.

### SUMMARY

The present application is intended to provide a positive electrode active material composition, a water-based positive electrode slurry, a positive electrode plate, a secondary battery, and an electrical device. The positive electrode plate provided in the present application has high compaction density and simultaneously has low water content, and thus the secondary battery simultaneously has high safety performance, high energy density, and good electrochemical performance.

The first aspect of the present application provides a positive electrode active material composition including a first positive electrode active material, a second positive electrode active material, and a third positive electrode active material, wherein the first positive electrode active material has a volume average particle size Dv50 denoted as A1 in µm, with A1 satisfying 0.2≤ A1 ≤ 0.8; the second positive electrode active material has a volume average particle size Dv50 denoted as A2 in µm, with A2 satisfying 1.0 ≤ A2 ≤ 2.5; and the third positive electrode active material has a volume average particle size Dv50 denoted as A3 in µm, with A3 satisfying 3.0 ≤ A3 ≤ 6.0.

The inventors of the present application, during the research, have surprisingly found that by the combination of three positive electrode active materials having different particle sizes, the positive electrode plate can have improved compaction density and significantly reduced water content; as a result, the battery obtained therefrom can simultaneously have high safety performance, high energy density, and good electrochemical performance. Although the mechanism is not yet clear, the inventors of the present application speculate that the possible reason is that by combining the first positive electrode active material, the second positive electrode active material, and the third positive electrode active material having different particle sizes, a synergistic effect is achieved among the positive electrode active materials having three different particle sizes.

In some embodiments of the present application, 4 ≤ A3/A1 ≤ 20, and optionally 5 ≤ A3/A1 ≤ 15. Under the condition that A3/A1 is within an appropriate range, the synergistic effect between the third positive electrode active material and the first positive electrode active material can be better achieved. The dense filling state formed by the first positive electrode active material is effectively reduced by the third positive electrode active material. In addition, the positive electrode plate can have a higher compaction density and lower water content, and have good ion and electron transport performance.

In some embodiments of the present application, 1.6 ≤ A3/A2 ≤ 6.0, and optionally 2.0 ≤ A3/A2 ≤ 4.0. Under the condition that A3/A2 is within an appropriate range, the synergistic effect between the third and second positive electrode active materials can be better, and the regulating and lubricating effects of the second positive electrode active materials can be better too. Therefore, the positive electrode plate can have a higher compaction density and lower water content, and have good ion and electron transport performance.

In some embodiments of the present application, 1.5 ≤ A2/A1 ≤ 7.5, and optionally 1.8 ≤ A2/A1 ≤ 6.5. Under the condition that A2/A1 is within an appropriate range, the synergistic effect between the second and first positive electrode active materials can be better, and the regulating and lubricating effects of the second positive electrode active materials can be better too. Therefore, the positive electrode plate can have a higher compaction density and lower water content, and have good ion and electron transport performance.

In some embodiments of the present application, based on the total mass 100% of the positive electrode active material composition, the first positive electrode active material has a mass percentage content denoted as w1 of from 60% to 80%, the second positive electrode active material has a mass percentage content denoted as w2 of from 10% to 40%, and the third positive electrode active material has a mass percentage content denoted as w3 of from 7% to 15%. Under such circumstances, the positive electrode plate can have a higher compaction density and lower water content, and have good ion and electron transport performance.

In some embodiments of the present application, 5 ≤ w1/w3 ≤ 11, and optionally 6 ≤ w1/w3 ≤ 9. Under the condition that w1/w3 is within an appropriate range, the synergistic effect between the third positive electrode active material and the first positive electrode active material can be better. Therefore, the positive electrode plate can have a higher compaction density and lower water content, and have good ion and electron transport performance.

In some embodiments of the present application, the first positive electrode active material, the second positive electrode active material, and the third positive electrode active material each independently includes at least one of lithium iron phosphate, lithium manganese phosphate, lithium cobalt phosphate, lithium iron manganese phosphate, lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or the modified compound thereof; optionally, the first positive electrode active material, the second positive electrode active material, and the third positive electrode active material each independently includes at least one of the group consisting of lithium iron phosphate, lithium manganese phosphate, lithium cobalt phosphate, lithium iron manganese phosphate, or the modified compounds thereof.

In some embodiments of the present application, the first positive electrode active material, the second positive electrode active material, and the third positive electrode active material have identical material property.

In some embodiments of the present application, the first positive electrode active material is provided with a conductive carbon layer on the surface thereof.

In some embodiments of the present application, the second positive electrode active material is provided with a conductive carbon layer on the surface thereof.

In some embodiments of the present application, the third positive electrode active material is provided with a conductive carbon layer on the surface thereof.

In some embodiments of the present application, the first positive electrode active material mainly includes a primary particle structure.

In some embodiments of the present application, the second positive electrode active material mainly includes a primary particle structure.

In some embodiments of the present application, the third positive electrode active material mainly includes a secondary particle structure.

The second aspect of the present application provides a water-based positive electrode slurry, including a solid component and water as a solvent, wherein the solid component includes a water-based binder and a positive electrode active material composition of the first aspect of the present application.

In some embodiments of the present application, the water-based binder includes at least one of acrylonitrile copolymers, polyethylene imine, polyacrylic acid, polymethyl acrylic acid, polyacrylamide, polyethylene oxide, polyvinyl alcohol, sodium alginate, carboxymethyl chitosan, or sodium carboxymethyl cellulose.

A third aspect of the present application provides a positive electrode plate, including a positive electrode current collector and a positive electrode film layer arranged on the positive electrode current collector, wherein the positive electrode film layer includes a water-based binder and a positive electrode active material composition of the first aspect of the present application, alternatively, the positive electrode film layer is formed by drying the water-based positive electrode slurry of the second aspect of the present application.

The positive electrode plate of the present application can have a higher compaction density and lower water content, and it can have good ion and electron transport performance. Therefore, the battery assembled therefrom can simultaneously have high safety performance, high energy density, and good electrochemical performance.

In some embodiments of the present application, as shown in the scanning electron microscope of the cross-sectional image of the positive electrode film layer, the particles of the first positive electrode active material have a longest diagonal length denoted as a1 in µm, with a1 satisfying 0.2 ≤ a1 ≤ 1.2, and have an average distance between the centers of the adjacent particles of the first positive electrode active material denoted as L1 in µm, with L1 satisfying 0 ≤ L1 ≤ 1.0; the particles of the second positive electrode active material have a longest diagonal length denoted as a2 in µm, with a2 satisfying 1.5 ≤ a2 ≤ 2.7, and have an average distance between the centers of the adjacent particles of the second positive electrode active material denoted as L2 in µm, with L2 satisfying 0.5 ≤ L2 ≤ 2.5; and the particles of the third positive electrode active material have a longest diagonal length denoted as a3 in µm, with a3 satisfying 3.2 ≤ a3 ≤ 8.0, and have an average distance between the centers of the adjacent particles of the third positive electrode active material denoted as L3 in µm, with L3 satisfying 05.0 ≤ L3 ≤ 80.0.

In some embodiments of the present application, the positive electrode plate has a compaction density of ≥ 2.50 g/cm³, and has a water content of ≤ 400ppm after vacuum drying at 90°C for 6 hours. Optionally, the positive electrode plate has a water content of ≤ 365ppm after vacuum drying at 90°C for 6 hours.

A fourth aspect of the present application provides a secondary battery, including a positive electrode plate of the third aspect of the present application.

A fifth aspect of the present application provides an electrical device, including a secondary battery of the fourth aspect of the present application.

The secondary battery of the present application includes a positive electrode active material composition having a first positive electrode active material, a second positive electrode active material, and a third positive electrode active material, which have different particle sizes. The three positive electrode active materials, which have different particle sizes, can achieve synergistic effect, allowing the positive electrode plate to have a high compaction density and have a low water content, and further allowing the positive electrode plate to have good ion and electron transport performance. Therefore, the secondary battery of the present application can simultaneously have high safety performance, high energy density, and good electrochemical performance. The electrical device of the present application includes the secondary battery provided in the present application, and thus has advantages at least the same as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
Figure 1 is a schematic diagram of a secondary battery of one embodiment of the present application.
Figure 2 is an exploded view of a secondary battery of one embodiment of the present application.
Figure 3 is a schematic diagram of a battery module of one embodiment of the present application.
Figure 4 is a schematic diagram of a battery pack of one embodiment of the present application.
Figure 5 is an exploded view of the battery pack of one embodiment of the present application as shown in Figure 4.
Figure 6 is a schematic diagram of an electrical device of one embodiment of the present application using the secondary battery of the present application as the power source.
Figures 7 and 8 are the scanning electron microscopies images of the cross-sections of the positive electrode film layer of Example 1 at different magnifications.

### DETAILED DESCRIPTION

Hereinafter, the embodiments of the positive electrode active material composition, the water-based positive electrode slurry, the positive electrode plate, the secondary battery, and the electrical device will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in the present application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless otherwise stated, all the embodiments and the optional embodiments of the present application can be combined with each other to form a new technical solution, and such technical solution should be considered to be included in the disclosure of the present application.

Unless otherwise stated, all technical features and optional technical features of the present application can be combined with each other to form a new technical solution, and such technical solution should be considered to be included in the disclosure of the present application.

Unless otherwise stated, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further including step (c) indicates that step (c) may be added to the method in any order. As an example, the method may include steps (a), (b) and (c), steps (a), (c) and (b), or steps (c), (a) and (b), and the like.

Unless otherwise stated, the wording such as "comprise/comprising", "include/including", and "contain/containing" adopted in the present application indicates the open-ended mode, but also can be interpreted as the closed-ended mode. For example, they may mean comprising, including, or containing other components that are not listed, or comprising, including, or containing only the components as listed.

Unless stated otherwise, in the present application herein, the wording "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

Secondary batteries, also known as rechargeable batteries or batteries, refer to the batteries that can activate the active materials through charging after being discharged for continue use. Normally, secondary batteries include positive electrode plates, negative electrode plates, electrolytes, and separators. During the charging and discharging process of the battery, the active ions repeatedly intercalate into and deintercalate out of the positive and negative electrode plates. The separator is set between the positive and negative electrode plates, in order to prevent short circuits between the positive and negative electrodes, and to allow active ions to pass through. The electrolyte conducts active ions between the positive and negative electrode plates.

With the application and promotion of secondary batteries, their cost and environmental pollution issues are receiving increasing attention. Water-based positive electrode slurry has attracted increasing attention from researchers due to its low cost and environmentally friendly characteristics. Nevertheless, the fluidity of the water-based positive electrode slurry is poor, and it is not likely to disperse. Moreover, the obtained positive electrode plate has high water content, low compaction density, poor flexibility, and is not likely to roll.

In view of the above, the inventors of the present application, through extensive research and practice, have proposed a positive electrode active material composition suitable for use in aqueous positive electrode slurries and positive electrode plates.

### Positive electrode active material composition

The first aspect of the present application provides a positive electrode active material composition, including a first positive electrode active material, a second positive electrode active material, and a third positive electrode active material. The volume average particle size Dv50 of the first positive electrode active material is demoted as A1 in µm, 0.2 ≤ A1 ≤ 0.8; The volume average particle size Dv50 of the second positive electrode active material is demoted as A2 in µm, 1.0 ≤ A2 ≤ 2.5; The volume average particle size Dv50 of the third positive electrode active material is demoted as A3 in µm, 3.0 ≤ A3 ≤ 6.0.

Water-based positive electrode slurries are often water-based binders with hydrophilic groups (such as polyacrylic acid). These hydrophilic groups and water as the solvent can have a significant impact on the performance of secondary batteries. For example, there will be residual water in the positive electrode plate and the residual water is difficult to be completely removed. Therefore, after assembling the positive electrode plate into a battery, the residual water will have side reactions with the electrolyte and electrode active materials inside the battery, leading to the consumption of active ions; accordingly, the battery will have decreased energy density, over-rapid capacity decay, and inflation, which may cause increased safety risks. Effective technical measures are needed to reduce the impact of water on battery performance.

In existing technologies, the main strategies adopted for improving the performance of water-based positive electrode slurry are optimizing the molecular structure of water-based binders, optimizing slurry production processes, etc. However, in the existing technologies, the impact of positive electrode active materials on the performance of water-based positive electrode slurry is rarely considered.

Compared with the existing positive electrode plates prepared using oil-based positive electrode slurry, the positive electrode plates prepared using water-based positive electrode slurry still have the defect of low compaction density, which makes it difficult for assembled batteries to have high energy density. In addition, the existing positive electrode plates often have the defect of not being able to balance the compaction density and water content. For example, when the water content of the positive electrode plates is reduced, the compaction density of the positive electrode plates will reduce, and when the compaction density of the positive electrode plates is increased, the water content of the positive electrode plates will increase; accordingly, it is difficult for batteries to balance high energy density and good electrochemical performance.

The inventors of the present application have unexpectedly discovered during the research that the combination of three positive electrode active materials with different particle sizes can significantly reduce the water content of the positive electrode while improving the compaction density of the positive electrode, thereby reducing the side reactions among water, electrolyte, and electrode active materials. As a result, the battery can simultaneously have high safety performance, high energy density, and good electrochemical performance.

The particle size of the third positive electrode active material is relatively large, with a Dv50 being from 3.0 µm to 6.0 µm. Under such circumstance, the following advantages can be achieved: it is helpful in forming more gaps between the particles, thereby increasing the channels for evaporating the water in the slurry coating layer and further reducing the water content of the positive electrode plate; it is helpful in reducing the combined water content on the particle surface, thereby further reducing the water content of the positive electrode plate. However, when the third positive electrode active material is used alone, it is difficult to form a dense filling state and thus the positive electrode plate has a lower compaction density, which is benefit for improving the energy density of the secondary battery. In addition, when the positive electrode plate has lower compaction density, the contact area between the positive electrode active material particles is smaller, and thus the electronic conduction channels are fewer; accordingly, the internal resistance of the battery is higher, resulting in a decrease in the rate performance of the secondary battery.

The particle size of the first positive electrode active material is small, with a Dv50 being from 0.2 µm to 0.8 µm. Under such circumstances, it is readily to form a dense filling state, with a higher bulk density, resulting in a higher compaction density of the positive electrode plate. However, since the specific surface area of the first positive electrode active material is usually higher, the bound water content on the particle surface will be higher. Moreover, the first positive electrode active material is likely to form a dense filling state, so there are fewer water evaporation channels in the slurry coating layer. In addition, the compaction density of the positive electrode plate is usually too high, so the spacing between particles is small and the contact is closer, resulting in a decrease in the active ion transport channels; accordingly, it is not beneficial for the exertion of battery capacity. Therefore, when the first positive electrode active material is used alone, it is not helpful in the removing of water from the slurry coating layer, as a result, the positive electrode plate will have a high water content and poor active ion transport performance, and in turn the obtained battery is difficult to balance high energy density and good electrochemical performance of the resulting battery.

The particle size of the second positive electrode active material is between the first positive electrode active material and the third positive electrode active material, with a Dv50 being from 1.0 µm to 2.5 µm. Under such circumstances, it is likely to form a dense filling state, resulting in a higher compaction density of the positive electrode. However, since the second positive electrode active material is likely to form a dense filling state, there are fewer water evaporation channels in the slurry coating layer. In addition, the particles of the second positive electrode active material have small spacing and close contact therebetween, leading to fewer active ion transport channels; accordingly, accordingly, it is not beneficial for the exertion of the battery. Therefore, when the second positive electrode active material is used alone, it is not helpful in the removal of water from the slurry coating layer. The positive electrode plate will have a high water content and poor active ion transport performance, and in turn the obtained battery is difficult to balance high energy density and good electrochemical performance.

Therefore, when the first positive electrode active material, the second positive electrode active material, and the third positive electrode active material are used alone, the positive electrode plate cannot have a high compaction density and simultaneously have a low water content, so the obtained battery is difficult to balance high energy density and good electrochemical performance.

Therefore, although the mechanism is not yet clear, the inventors of the present application speculate that by combining the first positive electrode active material, the second positive electrode active material, and the third positive electrode active material, which have different particle sizes, a synergistic effect is achieved among the three different positive electrode active materials, so that the positive electrode plate have a higher compaction density and simultaneously have a lower water content, and further have good ion and electron transport performance; accordingly, a battery that can simultaneously have high safety performance, high energy density, and good electrochemical performance is obtained.

Firstly, by using the third positive electrode active material, more inter particle voids can be formed, and the channels for evaporating the water can be increased. Secondly, in the compaction process of the slurry coating layer, the first positive electrode active material having smaller size is likely to enter into the gaps between the particles, thereby increasing the compaction density of the positive electrode plate. Thirdly, the second positive electrode active material, having the particle size between the first and third positive electrode active materials, can play a role of adjusting and lubricating, i.e. adjusting the first and the third positive electrode active materials to form a suitable stacking state so as to ensure that the slurry coating layer has more channels for evaporating the water on the one hand, and on the other hand, in the compaction process of the slurry coating layer, lubricating the first positive electrode active material having smaller size to better slide and enter into the gaps between the particles, thereby increasing the compaction density of the positive electrode plate. Fourthly, the first and the third positive electrode active materials have significant difference in the particle sizes, which renders the particle difficult to slide, however, the second positive electrode active material can adjust the sliding effect between the particles of the first and the third positive electrode active materials, so that when the water in the slurry coating layer evaporates and the voids are formed, the third positive electrode active material is more likely to collapse under gravity to fill the voids; as a result, the cracks in the slurry coating layer formed due to the void effect result from the water evaporation during drying are reduced. Therefore, the slurry coating layer formed from the positive electrode active material composition of the present application can have both high compaction density and suitable channels for evaporating the water, which facilitates discharging water. In addition, the positive electrode plate has both a high compaction density and a low water content, and further has good ion and electron transport performance.

In addition, the first and the third positive electrode active materials have significant difference in the particle sizes, thus, when only the first and third positive electrode active materials are combined, the third positive electrode active material cannot effectively reduce the bulk density of the first positive electrode active material; as a result, the slurry coating layer do not have sufficient channels for evaporating the water, and thus is not conducive to effectively reducing the water content of the positive electrode plate. Moreover, the second and the third positive electrode active materials have little difference in the particle sizes, thus, when only the second and third positive electrode active materials are combined, the dense filling state is difficult to be formed, which results in a lower bulk density of particles and a lower compaction density of the positive electrode plate. The first and the second positive electrode active materials have small particle sizes, thus, when only the first and second positive electrode active materials are combined, the second positive electrode active material cannot effectively reduce the dense filling state formed by the first positive electrode active material; as a result, the slurry coating layer do not have sufficient channels for evaporating the water, which is not conducive to effectively reducing the water content of the positive electrode plate. Therefore, when any two of the first positive electrode active material, the second positive electrode active material, and the third positive electrode active material is combined, the positive electrode plate cannot have both a high compaction density and a low water content, the battery obtained therefrom is difficult have both high energy density and good electrochemical performance.

In the positive electrode active material composition of the present application, when the third and the first positive electrode active materials have significant difference in the particle sizes, the water removing effect of the slurry coating may be affected. In some embodiments, 4≤A3/A1≤ 20. Optionally, 4≤A3/A1≤18, 4≤A3/A1≤15, 4≤A3/A1≤10, 5≤A3/A1≤18, 5≤A3/A1≤15, or 5≤A3/A1≤10. Under the condition that the particle size ratio of the third positive electrode active material to the first positive electrode active material, A3/A1, is within an appropriate range, the third positive electrode active material and the first positive electrode active material can better synergistic effect, in which the third positive electrode active material may effectively reduce the dense filling state formed by the first positive electrode active material; thus the positive electrode plate can have both a higher compaction density and a lower water content, and further can have good ion and electron transport performance.

In the positive electrode active material composition of the present application, when the third and the second positive electrode active materials have small difference in the particle sizes, the water removing effect of the slurry coating layer may be affected. In some embodiments, 1.6 ≤ A3/A2 ≤ 6.0. Optionally, 1.6 ≤ A3/A2 ≤ 5.5, 1.6 ≤ A3/A2 ≤ 5.0, 1.6 ≤ A3/A2 ≤ 4.5, 1.6 ≤ A3/A2 ≤ 4.0, 2.0 ≤ A3/A2 ≤ 6.0, 2.0 ≤ A3/A2 ≤ 5.5, 2.0 ≤ A3/A2 ≤ 5.0, 2.0 ≤ A3/A2 ≤ 4.5, 2.0 ≤ A3/A2 ≤ 4.0, 2.5 ≤ A3/A2 ≤ 6.0, 2.5 ≤ A3/A2 ≤ 5.5, 2.5 ≤ A3/A2 ≤ 5.0, 2.5 ≤ A3/A2 ≤ 4.5, or 2.5 ≤ A3/A2 ≤ 4.0. Under the condition that the particle size ratio of the third positive electrode active material to the second positive electrode active material, A3/A2, is within an appropriate range, the third positive electrode active material and the second positive electrode active material can be better synergistic effect, and the second positive electrode active material can have fully effected adjusting and lubricating effects. Therefore, the positive electrode plate has both a higher compaction density and a lower water content, and further has good ion and electron transport performance.

In the positive electrode active material composition of the present application, when the second and the first positive electrode active material has significant difference in the particle sizes, water removing effect of the slurry coating layer may be affected. In some embodiments, 1.5 ≤ A2/A1 ≤ 7.5. Optionally, 1.5 ≤ A2/A1 ≤ 6.5, 1.5 ≤ A2/A1 ≤ 5.0, 1.5 ≤ A2/A1 ≤ 4.0, 1.8 ≤ A2/A1 ≤ 6.5, 1.8 ≤ A2/A1 ≤ 5.0, 1.8 ≤ A2/A1 ≤ 4.0, 2.0 ≤ A2/A1 ≤ 6.5, 2.0 ≤ A2/A1 ≤ 5.0, 2.0 ≤ A2/A1 ≤ 4.0, 2.5 ≤ A2/A1 ≤ 6.5, 2.5 ≤ A2/A1 ≤ 5.0, or 2.5 ≤ A2/A1 ≤ 4.0. Under the condition that the particle size ratio of the second positive electrode active material to the first positive electrode active material, A2/A1, is within an appropriate range, the second positive electrode active material and the first positive electrode active material can have better synergistic effect, and the second positive electrode active material can have fully effected adjusting and lubricating effects. Therefore, the positive electrode plate has both a higher compaction density and lower water content, and further has good ion and electron transport performance.

In some embodiments, 5 ≤ A3/A1 ≤ 15 and 2.0 ≤ A3/A2 ≤ 4.0. Optionally, 5 ≤ A3/A1 ≤ 15, 2.0 ≤ A3/A2 ≤ 4.0, and 1.8 ≤ A2/A1 ≤ 6.5. In those embodiments, the first positive electrode active material, the second positive electrode active material, and the third positive electrode active material can have better synergistic effect. Therefore, the positive electrode plate can have both a higher compaction density and a lower water content.

In some embodiments, based on the 100% of the total mass of the positive electrode active material composition, the first positive electrode active material has a mass percentage content w1 of from 60% to 80%, the second positive electrode active material has a mass percentage content w2 of from 10% to 40%, and the third positive electrode active material has a mass percentage content w3 of from 7% to 15%.

By using reasonable contents of the first positive electrode active material, the second positive electrode active material, and third positive electrode active material, which have different particle sizes, the slurry coating layer can exhibit a local distribution of small particles surrounding large particles. Under such distribution, on the one hand, the second positive electrode active material can better adjust the first positive electrode active material and the third positive electrode active material to form a suitable bulk state, so that the slurry coating layer has more channels for evaporating the water; and on the other hand, in the compaction process of the slurry coating layer, the first positive electrode active material having smaller size can better slide and enter into the gaps between the particles, thereby increasing the compaction density of the positive electrode. Therefore, the positive electrode plate has both a higher compaction density and a lower water content, and further has good ion and electron transport performance.

In the positive electrode active material composition of the present application, when the first positive electrode active material and the third positive electrode active material have significant difference in the contents, the third positive electrode active material cannot effectively reduce the dense filling state formed by the first positive electrode active material, resulting in insufficient channels for evaporating water of the slurry coating layer; as a result, the water removing effect of the slurry coating layer may be affected. When the first positive electrode active material and the third positive electrode active material have small difference in the contents, the high bulk density of the first positive electrode active material cannot be completely used, which is not conducive to producing positive electrode plates having high compaction density. In some embodiments, 5 ≤ w1/w3 ≤ 11. Optionally, 5.5 ≤ w1/w3 ≤ 11, 6 ≤ w1/w3 ≤ 11, 6.4 ≤ w1/w3 ≤ 11, 7 ≤ w1/w3 ≤ 11, 7.5 ≤ w1/w3 ≤ 11, 5.5 ≤ w1/w3 ≤ 9, 6 ≤ w1/w3 ≤ 9, 6.4 ≤ w1/w3 ≤ 9, 7 ≤ w1/w3 ≤ 9, or 7.5 ≤ w1/w3 ≤ 9. When the content ratio of the first positive electrode active material to the third positive electrode active material, w1/w3, is within an appropriate range, the third positive electrode active material and the first positive electrode active material can have better synergistic effect. Therefore, the positive electrode plate has both a higher compaction density and a lower water content, and further has good ion and electron transport performance.

In the positive electrode active material composition of the present application, the first positive electrode active material, the second positive electrode active material, and the third positive electrode active material are all materials that can let the lithium ions deintercalate out of and intercalate into. In some embodiments, the first positive electrode active material, the second positive electrode active material, and the third positive electrode active material each independently include at least one of lithium transition metal oxides, lithium containing phosphates with olivine structure, or the modified compounds thereof.

As examples, the first positive electrode active material, the second positive electrode active material, and the third positive electrode active material each independently includes at least one of lithium iron phosphate, lithium manganese phosphate, lithium cobalt phosphate, lithium iron manganese phosphate, lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or the modified compound thereof. Optionally, the first positive electrode active material, the second positive electrode active material, and the third positive electrode active material each independently includes at least one of lithium iron phosphate, lithium manganese phosphate, lithium cobalt phosphate, lithium iron manganese phosphate, or the modified compounds thereof.

In some embodiments, the first positive electrode active material, the second positive electrode active material, and the third positive electrode active material may be identical.

Optionally, the first positive electrode active material, the second positive electrode active material, and the third positive electrode active material are all lithium-containing phosphates with an olivine structure and the modified compounds thereof. Furthermore, the first positive electrode active material, the second positive electrode active material, and the third positive electrode active material are all at least one of lithium iron phosphate, lithium manganese phosphate, lithium cobalt phosphate, lithium iron manganese phosphate, and the modified compounds thereof.

In the present application, the modified compounds of each positive electrode active material as mentioned above can be doping modified, surface coating modified, or doping and surface coating modified positive electrode active material. In some embodiments, the surface of the first positive electrode active material can be provided with a conductive carbon layer. In some embodiments, the surface of the second positive electrode active material can be provided with a conductive carbon layer. In some embodiments, the surface of the third positive electrode active material can be provided with a conductive carbon layer.

In some embodiments, the first positive electrode active material mainly includes a primary particle structure (i.e. a single crystal particle structure). For example, the first positive electrode active material includes more than 90%, and optionally more than 92%, more than 94%, more than 96%, more than 98%, more than 99%, or even 100% of the primary particle structure. In some embodiments, the second positive electrode active material mainly includes a primary particle structure (i.e., a single crystal particle structure). For example, the second positive electrode active material includes more than 90%, and optionally more than 92%, more than 94%, more than 96%, more than 98%, more than 99%, or even 100% of the primary particle structure. In some embodiments, the third positive electrode active material mainly includes a secondary particle structure (i.e. an agglomerated particle structure). For example, the third positive electrode active material includes more than 90%, and optionally more than 92%, more than 94%, more than 96%, more than 98%, more than 99%, or even 100% of the secondary particle structure.

Usually, the primary particles have fewer lattice defects, smoother crystal surfaces, and higher compaction density. Nevertheless, when only primary particles are used, an overly dense filling state may be formed, which is not conducive to the water removing and electrolytic solution infiltration. Accordingly, the battery may have poor charge and discharge rate performance. In the positive electrode active material composition of the present application, the primary particles and the secondary particles are combined, thus, the positive electrode plate can have a high compaction density and have a lower water content, and further the secondary battery can have both high energy density and good rate performance.

In some embodiments, the first positive electrode active material includes the spherical or quasi-spherical morphology. In some embodiments, the second positive electrode active material includes spherical or quasi-spherical morphology. In some embodiments, the third positive electrode active material includes spherical or quasi-spherical morphology. The term "quasi-spherical" means that a particle that is essentially spherical, or means that a particle is a sphere having the aspect ratio close to 1, for example, not greater than 1.3 or optionally not greater than 1.2.

When the positive electrode active material is spherical or quasi-spherical morphology of, it can have better sliding effect, and thus can timely fill into the gaps between the particles, and thus increase the compaction density of the positive electrode plate.

In some embodiments, the positive electrode active material composition includes the first positive electrode active material, the second positive electrode active material, and the third positive electrode active material. The first positive electrode active material has a volume average particle size Dv50 denoted as A1 in µm, 0.2 ≤ A1 ≤ 0.8. The second positive electrode active material has a volume average particle size Dv50 donated as A2 in µm, 1.0 ≤ A2 ≤ 2.5. The third positive electrode active material has a volume average particle size Dv50 denoted as A3 in µm, 3.0 ≤ A3 ≤ 6.0. 4 ≤ A3/A1 ≤ 20, and optionally, 5 ≤ A3/A1 ≤ 15. 1.6 ≤ A3/A2 ≤ 6.0, and optionally, 2.0 ≤ A3/A2 ≤ 4.0; 1.5 ≤ A2/A1 ≤ 7.5. Optionally, 1.8 ≤ A2/A1 ≤ 6.5. Based on 100% of the total mass of the positive electrode active material composition, the first positive electrode active material has a mass percentage content dented as w1 of from 60% to 80%, the second positive electrode active material has a mass percentage content denoted as w2 of from 10% to 40%, and the third positive electrode active material has a mass percentage content denoted as w3 of from 7% to 15%; 5 ≤ w1/w3 ≤ 11, and optionally, 6 ≤ w1/w3 ≤ 9. In the positive electrode active material composition of the present application, by using reasonable particle size and mass content of the first positive electrode active material, the second positive electrode active material, and the third positive electrode active material, the positive electrode active materials having three different particle sizes can have better synergistic effect, thus, the positive electrode plate has both a higher compaction density and a lower water content, and further has good ion and electron transport performance; as a result, the battery obtained therefrom can have high safety performance, high energy density, and good electrochemical performance.

In the present application, the average volume particle size Dv50 of the material, having a well-known meaning in the art, represents the particle size when the cumulative volume distribution percentage of the material reaches 50%. It can be measured using instruments and methods well-known in the art. For example, it can be determined according to GB/T 19077-2016 or ISO 13320:2009. An exemplary testing method may include the following steps: an appropriate amount of the sample to be tested (for example, the sample concentration is adjusted to ensure a shade level of from 8% to 12%) is added into 20ml of deionized water and the is sonicated for 5 minutes (for example, the ultrasound frequency is 53KHz, and the ultrasound power is 120W) to completely disperse the sample; afterwards, the testing is carried out according to GB/T19077-2016 or ISO 13320:2009. The testing instrument may be a laser particle size analyzer, such as the MasterSizer 2000 laser particle size analyzer from Marvin Instruments Limited, UK.

### Water-based positive electrode slurry

The second aspect of the present application provides a water-based positive electrode slurry, including a solid component and water as the solvent, in which the solid component includes a water-based binder and a positive electrode active material composition according to any embodiment of the first aspect of the present application.

The types of water-based binder in the present application are not particularly limited, and can be selected according to actual requirements. In some embodiments, the water-based binder includes, but is not limited to, at least one of acrylonitrile copolymers, polyethylene imine (PEI), polyacrylic acid (PAA), polymethacrylic acid (PMAA), polyacrylamide (PAM), polyethylene oxide (PEO), polyvinyl alcohol (PVA), sodium alginate (SA), carboxymethyl chitosan (CMCS), or sodium carboxymethyl cellulose (CMC). As an example, the acrylonitrile copolymer includes, but is not limited to, at least one of LA133 or LA132.

In some embodiments, based on the total mass of the solid components, the water-based binder may have a mass percentage content of from 0.5% to 5%.

In some embodiments, based on the total mass of the solid component, the positive electrode active material composition may have a mass percentage content of from 93% to 99%.

In some embodiments, the solid component may optionally include a conductive agent. As an example, the conductive agent may include, but is not limited to, at least one of superconducting carbon, conductive graphite, acetylene black, carbon black, Koqin black, carbon dots, carbon nanotubes, graphene, carbon nanofibers, or vapor grown graphite tubes (VGGT).

Optionally, the conductive agent may include the vapor grown graphite tubes (VGGT), which can improve the distribution of water-based binders and increase the cohesion of the coating layer, thereby improving the flexibility of the positive electrode plate.

Optionally, based on the total mass of the solid component, the conductive agent may have a mass percentage content of from 0.5% to 2%.

In some embodiments, the aqueous positive electrode slurry may optionally include other additives, such as plasticizers, in order to improve the flexibility of the positive electrode plate. As an example, the plasticizer may include, but is not limited to, at least one of dimethyl phthalate, diethyl phthalate, dibutyl phthalate, dimethyl carbonate, diethyl carbonate, or propylene carbonate.

The method for preparing the water-based positive electrode slurry of the present application is well-known. In some embodiments, the water-based positive electrode slurry may be formed by dispersing the positive electrode active material composition, the water-based binder, the optional conductive agent, and any other components into water as the solvent and stirring evenly. The sequences of adding each material are not particularly limited, accordingly, each material can be added simultaneously or in batches.

### Positive electrode plate

The third aspect of the present application provides a positive electrode plate, including a positive electrode current collector and a positive electrode film layer arranged on the positive electrode current collector; the positive electrode film layer includes a water-based binder and a positive electrode active material composition according to the first aspect of the present application, or is formed by drying the water-based positive electrode slurry according to the second aspect of the present application.

The positive electrode plate of the present application can have both a higher compaction density and a lower water content, and further have good ion and electron transport performance. Therefore, the battery assembled therefrom can have high safety performance, high energy density, and good electrochemical performance.

In some embodiments, the positive electrode film layer may be formed by applying the aqueous positive electrode slurry on the positive electrode current collector, drying, cold pressing etc. The positive electrode current collector has two surfaces opposite in the thickness direction thereof, and the positive electrode film layer is arranged on one of or two of the opposite surfaces of the positive electrode current collector.

In some embodiments, the thickness of the positive electrode film layer is not particularly limited, and for example, it may be from 50 µm to 500 µm.

In the present application, the thickness of the positive electrode film layer has a meaning well-known in the art and thus can be determined using methods well-known in the art, such as a spiral micrometer. It should be noted that the thickness of the positive electrode film layer provided in the present application refers to the thickness of the positive electrode film layer on one side of the positive electrode current collector. When the positive electrode film layer is set on two sides of the positive electrode current collector, the thickness of the positive electrode film layer on each side satisfies the requirements of the present application, that is, falls within the protection scope of the present application. The thickness of the positive electrode film layer in the present application refers to the thickness of the positive electrode film layer for assembling batteries after cold pressing.

In some embodiments, the positive current collector may be a metal foil or a composite current collector. As an example of the metal foil, it may be an aluminum foil. The composite current collector may include a polymer material as the base layer and a metal material layer formed on at least one surface of the polymer material as the base layer. As an example, the metal material may include at least one of aluminum, aluminum alloys, nickel, nickel alloys, titanium, titanium alloys, silver, or silver alloys. As an example, the polymer material as the base layer may include at least one of polypropylene (PP), polyethylene terephthalate (PET), polybutylene terephthalate (PBT), polystyrene (PS), or polyethylene (PE).

In some embodiments, as shown in the cross-sectional image of the positive electrode film layer obtained from scanning electron microscope (SEM), the particles of the first positive electrode active material have a longest diagonal length denoted as a1 in µm, 0.2 ≤ a1 ≤ 1.2, and the average distance between the centers of the adjacent particles of the first positive electrode active material is denoted as L1 in µm, 0 ≤ L1 ≤ 1.0.

In some embodiments, as shown in the cross-sectional image of the positive electrode film layer obtained from scanning electron microscope (SEM), the particles of the second positive electrode active material have a longest diagonal length of denotes as a2 in µm, 1.5 ≤ a2 ≤ 2.7, and the average distance between the centers of the adjacent particles of the second positive electrode active material is denoted as L2 in µm, 0.5 ≤ L2 ≤ 2.5.

In some embodiments, as shown in the cross-sectional image of the positive electrode film layer obtained from scanning electron microscope (SEM), the particles of the third positive electrode active material have a longest diagonal length of denotes as a3 in µm, 3.2 ≤ a3 ≤ 8.0, and the average distance between the centers of the adjacent particles of third positive electrode active material is denoted as L3 in µm, 5.0 ≤ L3 ≤ 80.0.

In the present application, the average distance between the centers of the adjacent particles of the first positive electrode active material may be tested as follows: the positive electrode plate which is coated on one side and cold pressed (if the positive electrode plate is coated on both sides, the positive electrode film layer on one side can be wiped off using water or organic solvent) is punch into a sample of 2cm × 2cm sample for testing; and in the cross-sectional image of the positive electrode film layer obtained from scanning electron microscope (SEM), the center distances of the adjacent particles of the first positive electrode active material are counted and the average value calculated. In order to improve the accuracy of the test results, multiple samples (such as more than 5) can be randomly selected and punched from the effective area of the positive electrode plate for testing, and the average value of the tested results can be calculated.

Likewise, the average distance between the centers of the adjacent particles of the second positive electrode active material and the average distance between the centers of the adjacent particles of the third positive electrode active material may be tested.

It should be noted that in the above tests directed to the positive electrode plate, the sample may be taken during the preparation of the battery or from the prepared secondary battery. When the above test sample is taken from a prepared secondary battery, as an example, the following steps may be followed for sampling.

The secondary battery (for safety reasons, the battery is usually kept at a fully discharged state) is discharged; afterwards it was disassembled, the positive electrode plate is taken out and soaked in dimethyl carbonate (DMC) for a certain period (such as 2-10 hours); then the positive electrode plate is taken out and dried at a certain temperature for a certain time (such as at 60°C for 4h); after drying, the positive electrode plate is taken out.

In addition, the above methods (testing the longest diagonal length of the particles and the average distance between adjacent particles) provided in the present application is directed to the positive electrode film layer on one side of the positive electrode current collector. When the positive electrode film layer is applied on two sides of the positive electrode current collector, if the test results of the positive electrode film layer on either side satisfies the requirements of the present application, the positive electrode plate is considered to fall within the protection scope of the present application.

In some embodiments, the compaction density of the positive electrode plate may be ≥ 2.50g/cm³, ≥ 2.52g/cm³, ≥ 2.53g/cm³, ≥ 2.54g/cm³, ≥ 2.55g/cm³, ≥ 2.56g/cm³, ≥ 2.57g/cm³, or ≥ 2.58g/cm³. In the present application, the compaction density of the positive electrode plate refers to the maximum value of the compaction density obtained before the positive electrode plate is broken due to folding. An exemplary test method includes the following steps: during the cold pressing, the pressure of the roller press is adjusted to continuously increase the compaction density of the positive electrode plate until the positive electrode plate is broken due to folding; the maximum compaction density obtained before the positive electrode plate is broken is the compaction density of the positive electrode plate of the present application.

In some embodiments, the water content of the positive electrode after vacuum drying at 90 °C for 6 hours may be ≤ 400ppm, ≤ 390ppm, ≤ 380ppm, ≤ 370ppm, ≤ 365ppm, ≤ 360ppm, ≤ 358ppm, ≤ 354ppm, ≤ 352ppm, ≤ 354ppm, ≤ 350ppm, ≤ 344ppm, ≤ 340ppm, or ≤ 335ppm.

In the present application, the water content of the positive electrode plate after vacuum drying at 90°C for 6 hours may be tested as follows: the positive electrode current collector is coated with an aqueous positive electrode slurry and then is placed in a vacuum oven in a drying room (dew point<-30°C) for drying the positive electrode film layer at 90°C for 6 hours to obtain the dried positive electrode film layer; then a powder sample of from 0.6g to 1g obtained from the dried positive electrode film layer (such as using a blade to scrape powder for sampling) is weighted and is placed in a water content testing box to determine the water content. The water content testing box may be a Karl Fischer water content analyzer, and the weighing instrument may be an electronic balance.

In some embodiments, the compaction density of the positive electrode plate is ≥ 2.50g/cm³, and the water content after vacuum drying at 90°C for 6 hours is ≤ 400ppm. Optionally, the compaction density of the positive electrode plate is ≥ 2.50g/cm³, and the water content after vacuum drying at 90 °C for 6 hours is ≤ 365 ppm.

In the present application, ppm represents the mass concentration.

### Secondary battery

The fourth aspect of the present application provides a secondary battery, which includes a positive electrode plate, a negative electrode plate, and an electrolyte. During the charging and discharging of the secondary battery, active ions repeatedly intercalate into and deintercalate out of between positive electrode and the negative electrode, and the electrolyte conduct the active ions between the positive electrode and the negative electrode.

### [Positive electrode plate]

The positive electrode plate used in the secondary battery of the present application is the positive electrode plate according to the third aspect of the present application.

### [Negative electrode plate]

In some embodiments, the negative electrode plate includes a negative current collector and a negative film layer arranged on at least one surface of the negative current collector. For example, the negative electrode current collector has two surfaces opposite in the thickness direction thereof, and the negative electrode film layer is arranged on one of or the two of the opposite surfaces of the negative electrode current collector.

The negative electrode current collector may be a metal foil or a composite current collector. As an example of the metal foil, it may be a copper foil. The composite current collector may include a polymer material as the base layer and a metal material layer formed on at least one surface of the polymer material as the base layer. As an example, the metal material may include at least one of copper, copper alloys, nickel, nickel alloys, titanium, titanium alloys, silver, and silver alloys. As an example, or polymer material as the base layer may include at least one of polypropylene (PP), polyethylene terephthalate (PET), polybutylene terephthalate (PBT), polystyrene (PS), or polyethylene (PE).

The negative electrode film layer typically includes a negative electrode active materials, an optional binders, an optional conductive agents, and other optional additives. The negative electrode film layer is typically formed by applying the negative electrode slurry on the negative electrode current collector, drying, and cold pressing. The negative electrode slurry is usually formed by dispersing the negative electrode active material, the optional conductive agent, the optional binder, and other optional additives in the solvent and stirring evenly. The solvent may be N-methylpyrrolidone (NMP) or water, but is not limited thereto. For example, the binder used for the negative electrode film layer may include at least one of styrene butadiene rubber (SBR), watersoluble unsaturated resin SR-1B, water-based acrylic resin (such as polyacrylic acid PAA, polymethyl acrylic acid PMAA, polyacrylic acid sodium PAAS), polyacrylamide (PAM), polyvinyl alcohol (PVA), sodium alginate (SA), or carboxymethyl chitosan (CMCS). For example, the conductive agent used for the negative electrode film layer may include at least one of superconducting carbon, acetylene black, carbon black, Koqin black, carbon dots, carbon nanotubes, graphene, or carbon nanofibers. Other optional additives may include thickeners (such as carboxymethyl cellulose sodium CMC), PTC thermistor materials, etc.

The negative electrode active material may be the negative electrode active material used for secondary batteries commonly known in the art. For example, the negative electrode active material may include at least one of natural graphite, artificial graphite, soft carbon, hard carbon, mesophase micro carbon spheres, silicon based materials, tin-based materials, lithium titanate, Li-Sn alloy, Li-Sn-O alloy, or Li-Al alloy. Silicon-based materials may include at least one of elemental silicon, silicon oxides, silicon carbon composites, silicon nitrogen composites, and silicon alloy materials. Tin-based materials may include at least one of elemental tin, tin oxide, or tin alloy materials. In the present application, the negative electrode active material is not limited to these materials, and other traditional and well-known materials that can be used as negative electrode active materials for secondary batteries can also be used. Those negative electrode active materials can be used alone or be used as the combination of two or more of them.

The negative electrode plate of the present application does not exclude any additional functional layers other than the negative electrode film layer. For example, in some embodiments, the negative electrode plate of the present application may include a conductive bottom layer (for example, composed of a conductive agent and a binder) which is sandwiched between the negative current collector and the negative film layer and arranged on the surface of the negative current collector. In other embodiments, the negative electrode plate of the present application may include a protective layer covering the surface of the negative electrode film layer.

### [Electrolyte]

The types of the electrolytes in the present application are not particularly limited, and thus can be selected according to requirements. For example, the electrolyte may include at least one of solid electrolyte or liquid electrolyte (i.e. the electrolytic solution).

In some embodiments, the electrolyte is the electrolytic solution, which includes an electrolyte salt and a solvent. The types of the electrolyte salts and the solvents are not particularly limited and thus can be selected according to actual requirements.

As examples, the electrolyte salt may include at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane sulfonimide) (LiTFSI), lithium trifluoromethane sulfonate (LiTFS), lithium difluorooxalate borate (LiDFOB), lithium dioxalate borate (LiBOB), lithium difluorophosphate (LiPO₂F₂), lithium difluorodioxalate phosphate (LiDFOP), or lithium tetrafluorooxalate phosphate (LiTFOP).

As examples, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), or diethyl sulfone (ESE).

In some embodiments, the electrolytic solution may further include optional additives. For example, the additives may include a negative electrode film-forming additives, and may include a positive electrode film-forming additives, and yet may include the additives that can improve certain performances of the battery, for example, the additives that can improve the overcharge performance of the battery, the additives that can improve the high-temperature performance of the battery, and the additives that can improve the low-temperature performance of battery. As examples, the additives may include but are not limited to at least one of ethylene carbonate (VC), fluoroethylene carbonate (FEC), or 1,3-propanesulfonic acid lactone (PS).

### [Separator]

In the secondary battery in which the electrolytic solution is used and in some batteries in which the solid electrolyte is used, a separators may be further included. The separators, being arranged between the positive electrode plate and the negative electrode plate, mainly prevent short circuit of the positive electrode and the negative electrode and allow the active ions to pass through. The typed of the separator are not particularly limited in the present application, and thus any well-known porous-structure separator with good chemical stability and mechanical stability may be used.

In some embodiments, the materials of the separator may include one or more selected from glass fibers, non-woven fabrics, polyethylene, polypropylene, and polyvinylidene fluoride. The separator may be a single-layer film or a composite film having multiple layers. When the separator is the composite film having multiple layers, materials of each layer may be identical or different.

In some embodiments, the positive electrode plate, the composite separator having multiple layers, and the negative electrode plate may be made into an electrode assembly by winding or stacking.

In some embodiments, the secondary battery may include an outer package. The outer package may encapsulate the electrode assembly and the electrolytic solution.

In some embodiments, the outer package of the secondary battery may be a hard case, such as a hard plastic case, an aluminum case, and a steel case. The outer package of the secondary battery may be a soft package, such as a pouch-type soft package. The materials of the soft bag may be plastic, such as at least one of polypropylene (PP), polybutylene terephthalate (PBT), or polybutylene succinate (PBS).

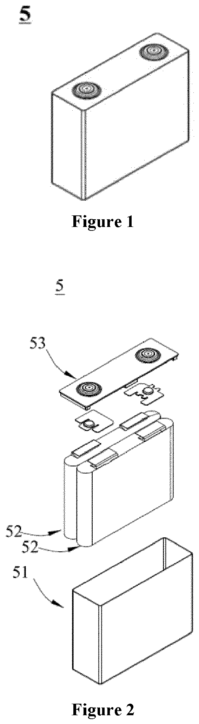

The shape of the secondary battery is not particularly limited in the present application. The secondary battery may be cylindrical, cubic, or in other arbitrary shape. Figure 1 shows the secondary battery 5 having a cubic structure as an example.

In some embodiments, as shown in Figure 2, the outer package may include a housing 51 and a cover plate 53. The housing 51 may include a bottom plate and side plates connected to the bottom plate, and the bottom plate and the side plates enclose a receiving cavity. The housing 51 has an opening communicated with the receiving cavity, and the cover plate 53 may cover the opening to close the receiving cavity. The positive electrode plate, the negative electrode plate and the separator may be wound or laminated to form an electrode assembly 52, which is encapsulated in the receiving cavity. A non-aqueous electrolyte is infiltrated into the electrode assembly 52. The secondary battery 5 may include one or more electrode assemblies 5 according to the requirements.

In some embodiments of the present application, the secondary battery of the present application may be assembled into a battery module. The battery module may include multiple secondary batteries; the particular number of the secondary batteries may be adjusted according to application and capacity of the battery module.

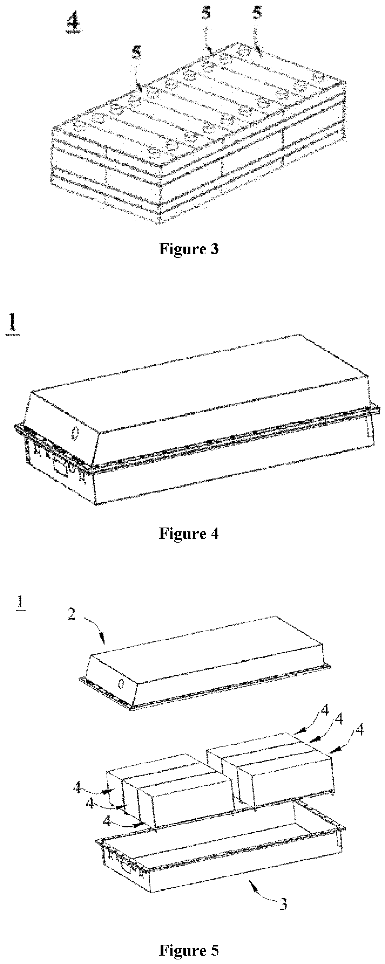

Figure 3 is a schematic diagram of the battery module 4 as an example. As shown in Figure 3, in the battery module 4, the multiple secondary batteries 5 may be arranged in sequence along the longitudinal direction of the battery module 4. Of course, they may be arranged in any other manner. Furthermore, the multiple secondary batteries 5 may be fixed by fasteners.

Optionally, the battery module 4 may further include a housing having an accommodating space in which the multiple secondary batteries 5 are accommodated.

In some embodiments, the above-mentioned battery modules can also be assembled into a battery pack, and the number of battery modules included in the battery pack can be adjusted according to the application and capacity of the battery pack.

Figures 4 and 5 are schematic diagrams of battery pack 1 as an example. As shown in Figures 4 and 5, the battery pack 1 may include a battery case and multiple battery modules 4 arranged in the battery case. The battery box includes an upper case body 2 and a lower case body 3, and the upper case body 2 covers the lower case body 3 to form a closed space for accommodating battery modules 4. The multiple battery modules 4 may be arranged in the battery case in any manner.

The method for preparing the secondary battery in the present application is well-known. In some embodiments, the positive electrode plate, the separator, the negative electrode plate, and the electrolytic solution may be assembled into a secondary battery. As an example, the positive electrode plate, the separator, and the negative electrode plate may form an electrode assembly by winding or stacking; the electrode assembly is placed in an outer packaging, dried, and then injected with electrolytic solution; after vacuum packaging, standing, formation, shaping, and other processes, a secondary battery may be obtained.

### Electrical device

A fifth aspect of the present application provides an electrical device including at least one of the secondary battery, the battery module, and the battery pack of the present application. The secondary battery, battery module or battery pack can be used as a power source of the electrical device, and can be used as an energy storage unit of the electrical device. The electrical device may be, but is not limited to, a mobile device (such as a mobile phone and a notebook computer), an electric vehicle (such as a pure electric vehicle, a hybrid electric vehicle, a plug-in hybrid electric vehicle, an electric bicycle, an electric scooter, an electric golf vehicle, and an electric truck), an electric train, a ship, a satellite, an energy storage system, and the like.

The electrical device can select a secondary battery, a battery module or a battery pack according to its usage requirements.

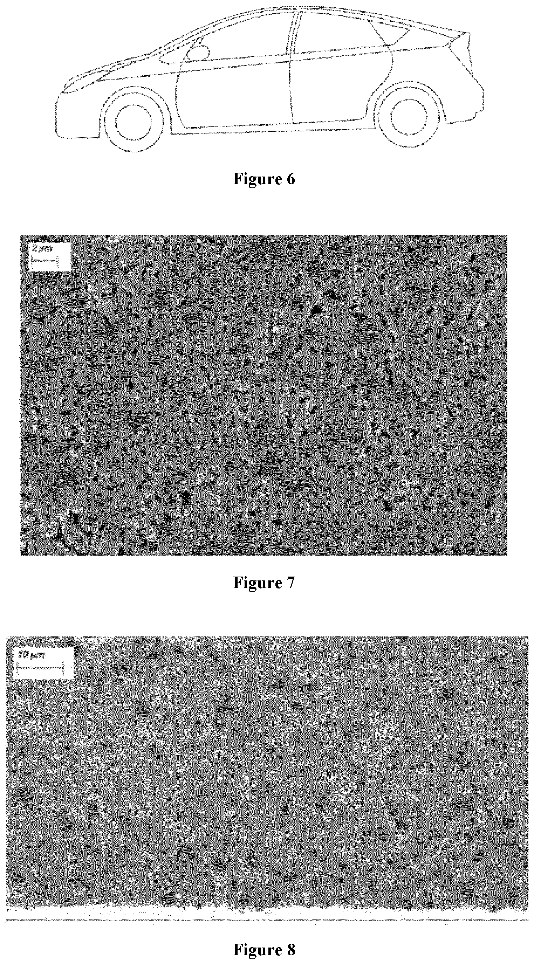

Figure 6 is a schematic diagrams of the electrical device as an example. The electrical device is a pure electric vehicle, a hybrid electric vehicle, or a plug-in hybrid electric vehicle. In order to satisfy high power and high energy density requirements of the electrical device, a battery pack or a battery module can be used.

As another example, the electrical device may be a mobile phone, a tablet computer, a notebook computer, and the like. The electric device is generally required to be light and thin, and thus may use a secondary battery as the power source.

### Examples

The following examples more specifically describe the content disclosed in the present application. The following examples are only used for explanatory description, and various modifications and changes within the scope of the present disclosure are apparent to those skilled in the art. Unless otherwise stated, all parts, percentages, and ratios described in the following examples are based on weight, and all reagents used in the following examples are commercially available or synthesized according to conventional methods and can be directly used without further treatment, and all instruments used in the following examples are commercially available.

### Example 1

### Preparation of positive electrode plate

The first positive electrode active material LiFePO₄ having a Dv50 of 0.4 µm, the second positive electrode active material LiFePO₄ having a Dv50 of 1.5 µm, and the third positive electrode active material LiFePO₄ having a Dv50 of 4 µm were uniformly mixed in a mass ratio of 70:22:8 to obtain the positive electrode active material.

The above positive electrode active material, a conductive carbon black (Super P), and the mixture of the water-based binder LA-133 and polyethylene imine mixed in 1:1 were mixed in a mass ratio of 96:1:3 in an appropriate amount of deionized water as the solvent to form a positive electrode slurry having a solid content of 50%; the positive electrode slurry was evenly applied on the surface of the aluminum foil as the positive electrode current collector, and then they were placed in a vacuum oven in a drying room (dew point < -30 °C) and dried under vacuum at 90°C for 6 hours; and after cold pressing, slitting and other processes, the positive electrode plate was obtained.

The water content of the positive electrode plate was tested as follows: 0.6 g-1 g of powder sample was taken from the positive electrode film layer which was dried under vacuum at 90°C for 6 hours and before cold pressed, and then the powder sample was placed in a water content testing box to determine the water content. The water content testing box was a Karl Fischer water content analyzer, and the weighing instrument was an electronic balance.

The compaction density of the positive electrode plate was tested as follows: during the cold pressing, the pressure of the roller press was adjusted to continuously increase the compaction density of the positive electrode plate until the positive electrode plate is broken due to folding; the maximum compaction density obtained before the positive electrode plate is broken is the compaction density of the positive electrode plate of the present application. The compaction density of the positive electrode plate = the mass of the positive electrode film layer / the volume of the positive electrode film layer. The mass and volume of the positive electrode film layer refer to the parameters of the positive electrode film on one side of the positive electrode current collector.

### Preparation of negative electrode plate

An artificial graphite as the negative electrode active material, a conductive carbon black (Super P), styrene butadiene rubber (SBR) as the binder, and sodium carboxymethyl cellulose (CMC) as the thickener were mixed in a mass ratio of 96.2:0.8:0.8: 1.2 in an appropriate amount of solvent deionized water to form a negative electrode slurry having a solid content of 30%; and the negative electrode slurry was applied evenly on the surface of a copper foil as the negative electrode current collector, and they were dried at 85 °C, after cold pressing and cutting, the negative electrode plate was obtained.

### Preparation of electrolytic solution

In an argon atmosphere glove box (H₂O<0.1ppm, O₂<0.1ppm), ethylene carbonate (EC) and methyl ethyl carbonate (EMC) were mixed in a volume ratio of 3:7 to obtain an organic solvent; and LiPF₆ was uniformly dissolved in the aforementioned organic solvent to obtain an electrolytic solution with the mass fraction of LiPF₆ being 12.5%.

### Preparation of separator

A ceramic slurry was applied on one of the surfaces of the PE porous film, and then they were dried to obtain a separator, with the thickness of the ceramic coating layer being 2 µm.

### Preparation of secondary batteries

The above positive electrode plates, separator, and negative electrode plates were stacked and winded in sequence to obtain the electrode assembly; the electrode assembly was placed into an aluminum housing as the outer packaging. After baking at 80 °C, the above electrolytic solution was added. After vacuum encapsulation, standing, formation, shaping, and other processes, a secondary battery was obtained.

### Examples 2-14 and Comparative Examples 1-10

The methods for preparing the secondary batteries is similar to Example 1, except that the parameters for preparing the positive electrode active material are different, as detailed in Table 1.

### Testing

At 25°C, the secondary batteries prepared in each Examples and Comparative Examples were charged at a constant current of 0.33C to 3.65V, and further charged at a constant voltage to 0.05C, after standing for 5 minutes, the charging capacity then was recorded as 0.33C charging capacity; after standing for 5 minutes, the secondary battery was discharged at a constant current of 0.33C to 2.5V; after standing for 30 minutes, the secondary battery was charged at a constant current of 2C to 3.65V, and further charged at a constant voltage to 0.05C, after standing for 5 minutes, the charging capacity then was recorded as 2C charging capacity. 2C/0.33C charging capacity retention rate characterized the rate performance of the secondary battery. The higher the 2C/0.33C charging capacity retention rate is, the better the rate performance of the secondary battery.

2C/0.33C charging capacity retention rate of the secondary battery (%) = (2C charging capacity/0.33C charging capacity) × 100%.

The test results of Examples 1-14 and Comparative Examples 1-10 were shown in Table 1.

**Table 1**

| Nos. | The first positive active material | | The second positive active material | | The third positive active material | | Water-based positive electrode plate | | 2C/0.33C charging capacity retention rate |
|---|---|---|---|---|---|---|---|---|---|
| | Dv50 (µm) | w1 (%) | Dv50 (µm) | w2 (%) | Dv50 (µm) | w3 (%) | Water content after drying under vacuum at 90 °C for 6 hours (ppm) | Compaction density (g/cm³) | |
| Example 1 | 0.4 | 70 | 1.5 | 22 | 4 | 8 | 352 | 263 | 97% |
| Example 2 | 0.4 | 70 | 1.5 | 19 | 4 | 11 | 335 | 2.56 | 97% |
| Example 3 | 0.4 | 80 | 1.5 | 11 | 4 | 9 | 358 | 2.59 | 96% |
| Example 4 | 0.4 | 80 | 1.5 | 17 | 4 | 13 | 354 | 2.55 | 97% |
| Example 5 | 0.4 | 60 | 1.5 | 32 | 4 | 8 | 360 | 2.61 | 97% |
| Example 6 | 0.4 | 60 | 1.5 | 30 | 4 | 10 | 331 | 2.52 | 97% |
| Example 7 | 0.2 | 70 | 1.5 | 22 | 4 | 8 | 388 | 268 | 95% |
| Example 8 | 0.8 | 70 | 1.5 | 22 | 4 | 8 | 344 | 2.53 | 96% |
| Example 9 | 0.4 | 70 | 1 | 22 | 4 | 8 | 352 | 2.52 | 96% |
| Example 10 | 0.4 | 70 | 2.5 | 22 | 4 | 8 | 398 | 2.50 | 94% |
| Example 11 | 0.4 | 70 | 1.5 | 22 | 3 | 8 | 362 | 2.58 | 96% |
| Example 12 | 0.4 | 70 | 1.5 | 22 | 6 | 8 | 362 | 2.55 | 96% |
| Example 13 | 0.4 | 70 | 1.5 | 25 | 4 | 15 | 316 | 2.34 | 93% |
| Example 14 | 0.4 | 80 | 1.5 | 13 | 4 | 7 | 410 | 262 | 94% |
| Comparative Example 1 | 0.4 | 100 | / | / | / | / | 650 | 2.76 | 78% |
| Comparative Example 2 | / | / | 1.5 | 100 | / | / | 530 | 2.56 | 82% |
| Comparative Example 3 | / | / | / | / | 4 | 100 | 303 | 213 | 89% |
| Comparative Example 4 | 0.4 | 50 | 1.5 | 50 | / | / | 580 | 2.69 | 80% |
| Comparative Example 5 | 0.4 | 50 | / | / | 4 | 50 | 560 | 2.69 | 80% |
| Comparative Example 6 | / | / | 1.5 | 50 | 4 | 50 | 320 | 2.36 | 90% |
| Comparative Example 7 | 0.1 | 70 | 1.5 | 22 | 4 | 8 | 560 | 2.72 | 85% |
| Comparative Example 8 | 1 | 70 | 1.5 | 22 | 4 | 8 | 330 | 2.41 | 92% |
| Comparative Example 9 | 0.4 | 70 | 0.8 | 22 | 4 | 8 | 540 | 2.68 | 83% |
| Comparative Example 10 | 0.4 | 70 | 1.5 | 22 | 8 | 8 | 330 | 2.38 | 92% |

From the test results as shown in Table 1, it can be seen that in the present application, by combining the first, second, and third positive electrode active materials having different particle sizes, a synergistic effect was achieved among the three positive electrode active materials having different particle sized. Accordingly, the positive electrode plate had both a high compaction density and a low water content, and further had good ion and electron transport performance. Therefore, the secondary battery obtained therefrom had good rate performance. Figures 7 and 8 are cross-sectional images of the positive electrode film layer of Example 1 obtained from scanning electron microscopy at different magnifications. From Figures 7 and 8, it can be seen that by using the positive electrode active material composition of the present application, the positive electrode plate had high compaction density.

From the test results of the Comparative Examples 1-3, it can be seen that when the first positive electrode active material, the second positive electrode active material, and the third positive electrode active material are used alone, the positive electrode plate as obtained did not have high compaction density and low water content, and the secondary battery as obtained had poor rate performance.

From the test results of the Comparative Examples 4-6, it can be seen that any combination of the first positive electrode active material, the second positive electrode active material, and the third positive electrode active material could not make the positive electrode plate have a high compaction density and low water content, and the secondary battery as obtained had also poor rate performance.

From the test results of the Comparative Examples 7-8, it can be seen that when the particle size of the first positive electrode active material was too small or too large, the positive electrode plate could not have high compaction density and a low water content, and the secondary battery as obtained from had poor rate performance. The possible reason might be as follows: when the particle size of the first positive electrode active material was too small, the third positive electrode active material could not effectively reduce the dense filling state formed by the first positive electrode active material, resulting in insufficient channels for evaporating water in the slurry coating layer, that is, high water content in the positive electrode plate, so the positive electrode plate had poor electrolytic solution infiltration; as the result, the secondary battery had poor rate performance; and when the particle size of the first positive electrode active material was too large, it is difficult to form a dense stacking effect, resulting in a lower compaction density of the positive electrode plate; moreover, since the contact area between the positive electrode active material particles was small, the electron conduction channels were fewer, and the internal resistance of the battery was higher; as a result, the secondary battery as obtained had poor rate performance too.

From the test results of Comparative Examples 9, it can be seen that when the particle size of the second positive electrode active material was too small, the positive electrode plate could not have high compaction density and low water content, and the secondary battery as obtained had poor rate performance. The possible reason might be as follows: the particle size of the second positive electrode active material was too small to provide good lubrication, resulting in insufficient channels for evaporating water in the slurry coating layer, high water content in the positive electrode plate; as a result, the secondary battery as obtained had poor rate performance.

From the test results of Comparative Examples 10, it can be seen that when the particle size of the third positive electrode active material was too large, the positive electrode plate could not have high compaction density and low water content, and the secondary battery as obtained had poor rate performance. The possible reason might be as follows: when the particle size of the third positive electrode active material was too large, it is difficult to achieve a dense filling effect, and thus the compaction density of the positive electrode plates was small, the contact area among the positive electrode active material particles was small, and the electronic conduction channels was fewer, so the internal resistance of the battery was higher; as a result, the secondary battery as obtained had poor rate performance. When the particle size of the third positive electrode active material was too large, the dispersion uniformity of the slurry and the uniformity of the coating thickness become worse, the coating surface becomes rougher, and the qualification rate of the positive electrode plate is lower.

From the test results of Examples 1-12 and 13-14, it can be seen that when the content ratio of the first positive electrode active material to the third positive electrode active material w1/w3 is further controlled to fall within an appropriate range, the synergistic effect between the third positive electrode active material and the first positive electrode active material could be better, and the positive electrode plate could have higher compaction density and lower water content, and further could have good ion and electron transport performance; as a result, the secondary battery as obtained had better rate performance. Optionally, 5 ≤ w1/w3 ≤ 11, and further optionally, 6 ≤ w1/w3 ≤ 9.

From the test results of Examples 1-12, it can be seen that when the particle sizes of the first positive electrode active material, the second positive electrode active material, and the third positive electrode active material were controlled to fall within an appropriate range (5 ≤ A3/A1 ≤ 15, 2.0 ≤ A3/A2 ≤ 4.0, 1.8 ≤ A2/A1 ≤ 6.5), the synergistic effect achieved by the three of positive electrode active materials having different particle sizes could be better. Furthermore, the positive electrode plate could have a higher compaction density and reduced water content, and further could have good ion and electron transport performance; as a result, the secondary battery as obtained had better rate performance.

It should be noted that the present application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the present application.

## Claims

1. A positive electrode active material composition, comprising a first positive electrode active material, a second positive electrode active material, and a third positive electrode active material, wherein
the first positive electrode active material has a volume average particle size Dv50 denoted as A1 in µm, with A1 satisfying 0.2 ≤ A1 ≤ 0.8;
the second positive electrode active material has a volume average particle size Dv50 denoted as A2 in µm, with A2 satisfying 1.0 ≤ A2 ≤ 2.5; and
the third positive electrode active material has a volume average particle size Dv50 denoted as A3 in µm, with A3 satisfying 3.0 ≤ A3 ≤ 6.0.

2. The positive electrode active material composition according to claim 1, wherein
4 ≤ A3/A1 ≤ 20, and optionally 5 ≤ A3/A1 ≤ 15; and/or,
1.6 ≤ A3/A2 ≤ 6.0, and optionally 2.0 ≤ A3/A2 ≤ 4.0; and/or,
1.5 ≤ A2/A1 ≤ 7.5, and optionally 1.8 ≤ A2/A1 ≤ 6.5.

3. The positive electrode active material composition according to claim 1 or 2, wherein
the first positive electrode active material has a mass percentage content denoted as w1 of from 60% to 80%,
the second positive electrode active material has a mass percentage content denoted as w2 of from 10% to 40%,
the third positive electrode active material has a mass percentage content denoted as w3 of from 7% to 15%,
based on the total mass 100% of the positive electrode active material composition.

4. The positive electrode active material composition according to claim 3, wherein 5 ≤ w1/w3 ≤ 11, and optionally 6 ≤ w1/w3 ≤ 9.

5. The positive electrode active material composition according to any one of claims 1-4, wherein the positive electrode active material composition satisfies at least one of the following conditions from (1) to (8):
(1) the first positive electrode active material, the second positive electrode active material, and the third positive electrode active material each independently includes at least one of lithium iron phosphate, lithium manganese phosphate, lithium cobalt phosphate, lithium iron manganese phosphate, lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and the modified compound thereof; and optionally, the first positive electrode active material, the second positive electrode active material, and the third positive electrode active material each independently includes at least one selected from the group consisting of lithium iron phosphate, lithium manganese phosphate, lithium cobalt phosphate, lithium iron manganese phosphate, or the modified compounds thereof;
(2) the first positive electrode active material, the second positive electrode active material, and the third positive electrode active material have identical material;
(3) the first positive electrode active material is provided with a conductive carbon layer on the surface thereof;
(4) the second positive electrode active material is provided with a conductive carbon layer on the surface thereof;
(5) the third positive electrode active material is provided with a conductive carbon layer on the surface thereof;
(6) the first positive electrode active material mainly includes a primary particle structure;
(7) the second positive electrode active material mainly includes a primary particle structure; or
(8) the third positive electrode active material mainly includes a secondary particle structure.

6. A water-based positive electrode slurry, comprising a solid component and water as the solvent, wherein the solid component comprises a water-based binder and a positive electrode active material composition according to any one of claims 1-5.

7. The water-based positive electrode slurry according to claim 6, wherein the water-based binder comprises at least one of acrylonitrile copolymers, polyethylene imine, polyacrylic acid, polymethyl acrylic acid, polyacrylamide, polyethylene oxide, polyvinyl alcohol, sodium alginate, carboxymethyl chitosan, or sodium carboxymethyl cellulose.

8. A positive electrode plate, comprising a positive electrode current collector and a positive electrode film layer arranged on the positive electrode current collector, wherein the positive electrode film layer comprises a water-based binder and a positive electrode active material composition according to any one of claims 1-5, alternatively, the positive electrode film layer is formed by drying the water-based positive electrode slurry according to claim 6 or 7.

9. The positive electrode plate according to claim 8, wherein
as shown in the cross-sectional image of the positive electrode film layer obtained from scanning electron microscope,
the particles of the first positive electrode active material have a longest diagonal length denoted as a1 in µm, with a1 satisfying 0.2 ≤ a1 ≤ 1.2, and have an average distance between the centers of the adjacent particles of the first positive electrode active material denoted as L1 in µm, with L1 satisfying 0 ≤ L1 ≤ 1.0;
the particles of the second positive electrode active material have a longest diagonal length denoted as a2 in µm, with a2 satisfying 1.5 ≤ a2 ≤ 2.7, and have an average distance between the centers of the adjacent particles of the second positive electrode active material denoted as L2 in µm, with L3 satisfying 0.5 ≤ L2 ≤ 2.5; and
the particles of the third positive electrode active material have a longest diagonal length denoted as a3 in µm, with a3 satisfying 3.2 ≤ a3 ≤ 8.0, and have an average distance between the centers of the adjacent particles of the third positive electrode active material denoted as L3 in µm, with L3 satisfying 05.0 ≤ L3 ≤ 80.0.

10. The positive electrode plate according to claim 8 or 9, wherein the positive electrode plate has a compaction density of ≥ 2.50 g/cm³, and has a water content of ≤ 400ppm, and optionally ≤ 365ppm, after vacuum drying at 90°C for 6 hours.

11. A secondary battery, comprising the positive electrode plate according to any one of claims 8-10.

12. An electrical device, comprising a secondary battery according to claim 11.
